# EUROPÄISCHE PATENTSCHRIFT

(11) **EP 0 827 692 B1**
(45) Veröffentlichungstag und Bekanntmachung des Hinweises auf die Patenterteilung: **31.10.2001**
(21) Anmeldenummer: 97115552.8
(22) Anmeldetag: 08.09.1997
(51) Int. Cl.: A21B 3/07, B65G 1/04

(54) **Anordnung und Verfahren zum Fördern einer Mehrzahl von Backgutträgern durch einen Gär- oder Backraum**
Arrangement and method for conveying a plurality of bakery trays through a proving or oven chamber
Dispositif et procédé pour transporter une pluralité de plateaux à travers une chambre de fermentation ou four

(30) Priorität: 09.09.1996 DE 19636564
(43) Veröffentlichungstag der Anmeldung: 11.03.1998
(73) Patentinhaber: Daub, Franz, 22523 Hamburg (DE)
(72) Erfinder: Daub, Franz, 22523 Hamburg (DE)
(74) Vertreter: Glawe, Delfs, Moll & Partner

(56) Entgegenhaltungen:
- EP-A- 0 126 431
- DE-A- 3 443 315
- DE-A- 3 617 098
- DE-A- 4 420 467

## Beschreibung

Die Erfindung geht von solchen bekannten Backanordnungen aus, bei denen der Backofen einen Förderer enthält, der die Backgutträger entweder im Durchlauf bewegt oder bei der Eingabe in die Tiefe des Backraums bewegt und beim Ausbacken wieder herausbewegt (DE-A-4420467 für Industrieöfen).

Die Ausstattung des Ofens mit einem Förderer ist aufwendig, insbesondere wenn es sich um einen Etagenofen handelt, in welchem jede Etage mit einem Förderer versehen werden muß. Außerdem haben die bekannten Anordnungen den Nachteil, daß die Verbindung sämtlicher in einer Ofenetage befindlicher Backgutträger durch denselben Förderer die Freiheit des Bäckers in der Gestaltung der Backzeiten einschränkt. Wenn nämlich ein neuer Backgutträger eingegeben werden soll und gleichzeitig ein anderer Backgutträger am Entnahmeende ansteht, so läßt sich nicht vermeiden, daß letzterer den Ofen dabei verläßt.

Der Erfindung liegt die Aufgabe zugrunde, die Anordnung unaufwendiger zu gestalten und die Freiheit des Bäckers bezüglich der Wahl der Backzeiten zu vergrößern.

Die erfindungsgemäße Lösung liegt in den Merkmalen der Ansprüche 1 bzw. 2.

Zwar werden auch im Fall der Erfindung die Backgutträger von dem Eingabeförderer einzeln in den Backraum eingeschoben, wobei bei jedem Einschub die Gruppe der bereits darin befindlichen Backgutträger weiter vorgeschoben wird. Während aber bei dem bekannten Verfahren stets am Ende der Vorrichtung ein Backgutträger abgenommen werden muß, wenn ein neuer Backgutträger eingeschoben wird, und dadurch eine synchrone Arbeitsweise an beiden Enden erforderlich wird, gestattet es die Erfindung, eine beliebige Anzahl von Backgutträgern zu entnehmen, ohne daß gleichzeitig eingeschoben wird. Jedes Mal, wenn ein an der Entnahmeöffnung anstehender Backgutträger herausgezogen wird, wird gleichzeitig durch die zugfeste Verbindung der Backgutträger miteinander die gesamte im Raum befindliche Gruppe von Backgutträgern um eine Teilung weitergezogen. Unmittelbar nach Entnahme eines oder mehrerer Backgutträger steht daher der folgende Backgutträger zur Entnahme bereit. Dies ist von Durchlaufregallagern bekannt (DE-A-36 17 098, EP-A-126 431).

Es ist auch ein Durchlaufregallager bekannt (DE-A-34 43 315), das insbesondere zur Reifung von Käse bestimmt ist, durch das die unveränderliche Eingabe-Ausgabe-Reihenfolge bekannter Lager überwunden werden soll, indem an beiden Enden einer Regalschiene sowohl eingegeben als auch entnommen werden kann. Dies hat mit der Erfindung nichts zu tun. Für das Wenden des eingelagerten Guts wird bei dem bekannten Lager ein großer Bauaufwand getrieben. Seine Anwendungsausrichtung und die dafür als wesentlich hervorgehobenen Eigenschaften sind dem Backofenbau zu fremd, als daß es dafür als Vorbild hätte dienen können.

Bei der Benutzung des erfindungsgemäßen Backofens kann im einfachsten Fall jeweils die gesamte Etage des Backraums durch Einschieben von Backgutträgern gefüllt werden. Sie kann auch in ihrer Gesamtheit wieder im wesentlichen gleichzeitig durch aufeinanderfolgende Entnahme einzelner Backgutträger entleert werden. Beim Füllen ist dabei lediglich der Eingabeförderer und beim Entleeren lediglich der Entnahmeförderer tätig. Jedoch müssen sich Füllung und Entleerung nicht immer auf die gesamte Etage beziehen. Wichtig ist, daß Entnahme und Eingabe zeitlich voneinander entkoppelt werden. Es können daher Füllungslücken und entsprechende Zeitdifferenzen zwischen Eingabe und Entnahme entstehen. Diese beziehen sich bei dem angegebenen bevorzugten Verfahren jeweils auf eine gesamte Etage. Jedoch ist es auch denkbar, daß eine Lücke verbleibt zwischen einer vorlaufenden Gruppe, die sich in mehr oder weniger ständiger, sukzessiver Entnahmebewegung befindet, und einer zweiten Gruppe, die durch sukzessive Eingabe nachwächst.

Das erfindungsgemäße Verfahren erlaubt auch eine hohe Variabilität in der Art der aufeinanderfolgend zu behandelnden Backwaren und ihrer Behandlungszeiten. Es ist durchaus möglich, einer Gruppe von Backgutträgern andere Backzeiten als einer anderen Gruppe zuzuordnen. Man kann somit verschiedene Backzeiten bei den in einer Etage befindlichen Backgutträgern vorsehen. Voraussetzung dafür ist, daß die bei der Eingabe eines Backgutträgers diesem zugeordnete Backzeit mindestens ebenso lang ist wie die noch verbleibende Backzeit der in derselben Etage vor ihm befindlichen Backgutträger.

Computersteuerung der einzelnen unterschiedlichen Zeitabläufe gestattet es trotz der großen Variabilität, die das erfindungsgemäße Verfahren ermöglicht, die Übersicht zu wahren. Geeignete Steuerungsprogramme sind bekannt und bedürfen daher hier keiner Beschreibung.

Als Backgutträger kommen beispielsweise Bleche oder Kastenverbände in Betracht. Sie werden an ihren Vor- und Rückseiten mit komplementären Einrichtungen für die schub- bzw. zugfeste Verbindung ausgerüstet. Dabei kann es sich beispielsweise um komplementäre Haken handeln. Diese können leicht durch eine vertikale Relativbewegung in gegenseitigen Eingriff gebracht werden. Dies ist bei Durchlaufregallagern bekannt (DE-A-36 17 098, EP-A-0 126 431). Eine solche Relativbewegung ist bei Verwendung von etagenförmig aufgebauten Backvorrichtungen problemlos, weil die dafür bekannten Beschickungseinrichtungen ohnehin für die Ausführung von Vertikalbewegungen eingerichtet sind. Diese Art der Kopplung bzw. der Entkopplung hat den Vorteil, daß die Verbindungseinrichtungen als solche starr ausgebildet sein können. Jedoch ist es auch möglich, die Verbindungseinrichtungen mit bewegten Elementen zu versehen, die beispielsweise das gegenseitige Einklinken gestatten, wenn ein folgender Backgutträger in gleicher Ebene an einen vorlaufenden Backgutträger herangeschoben wird.

Nicht alle Backgutträger in ihrer herkömmlichen Form sind zur Anbringung von Verbindungseinrichtungen geeignet. Eine bevorzugte Ausführungsform der Erfindung zeichnet sich deshalb dadurch aus, daß besondere Schub- und Zugrahmen vorgesehen sind, in die herkömmliche Backgutträger eingesetzt werden können. Sie können in den Rahmen während einer gesamten Arbeitsfolge oder auch während mehrerer Arbeitsfolgen verbleiben, wenn die Rahmen mit ihnen sämtliche Stationen der Anlage durchlaufen. Man wird dann einen Wechsel der Rahmen bzw. das Lösen der Backgutträger aus den Rahmen nur dann vornehmen, wenn die Backgutträger gereinigt werden müssen oder wenn eine andere Art von Backgutträgern eingesetzt werden soll, für die bislang keine Rahmen zur Verfügung stehen. Die Backgutträger werden dann in der Regel auch mit den ihnen zugeordneten Rahmen zwischengelagert. Dies ist sehr platzsparend, und die Einlagerung und Entnahme sind einfach.

Es kommt aber auch eine Lösung der Backgutträger von den zugehörigen Rahmen während des Verfahrensablaufs in Frage. Wenn beispielsweise die Gebäckformmaschine nicht mit Rahmen, sondern nur mit dünnen Blechen beschickt werden kann, wird man die Bleche mit den darauf liegenden Gebäckstücken erst nach der Gebäckformmaschine in die Rahmen einsetzen.

Im übrigen erfolgt die Behandlung der Backgutträger in üblicher Weise. So kann beispielsweise auch ein Wechsel des Backgutträgers zwischen Gärraum und Backöfen stattfinden. Damit Bleche trotz der größeren Höhe des Rahmens für Beleg- und Abnahmevorrichtungen in der Form sog. Krabbler in herkömmlicher Weise zugänglich sind, kann vorgesehen sein, daß die Blechoberseite nicht niedriger liegt als die Rahmenoberkante.

Zum Einschieben bzw. Herausziehen von Backgutträgern eignen sich Vorrichtungen, die die erforderliche Schub- oder Zugbewegung auf die Backgutträger übertragen können und ggf. auch höhenverstellbar bzw. -verfahrbar sind. Wegen ihrer Einfachheit werden Vorrichtungen mit an einer umlaufenden Kette angeordneten Mitnehmern bevorzugt, die mit den an den Backgutträgern vorgesehenen Haken in bzw. außer Eingriff gebracht werden können. Letzteres kann auch leicht dadurch geschehen, daß die Mitnehmer jeweils dann in Eingriff gehoben bzw. außer Eingriff gesenkt werden, wenn sie in ihren Umlenkweg am Ende der Kette eintreten bzw. aus diesem in den Bereich des geraden Trums übertreten.

Die Backgutträger können auf geeigneten Gleitschienen im Backofen gleitend bewegt werden. Im Falle großer Abmessungen und entsprechend großer Reibwiderstände können auch Rollen vorgesehen werden, die an den Backgutträgern oder stationär vorgesehen sind.

Die Erfindung wird im folgenden näher unter Bezugnahme auf die Zeichnung erläutert, die ein Ausführungsbeispiel schematisch veranschaulicht. Es zeigen:
- Fig.1: eine schematische Gesamtansicht der Anlage
- Fig.2: einen Teil-Längsschnitt durch eine Etage des Backofens,
- Fig.3: einen Teilquerschnitt durch den Backofen und
- Fig.4: eine Teilansicht für zwei Rahmen mit deren zusammenwirkender Hakenanordnung.

In der bei 1 schematisch angedeuteten Gebäckform- und Belegmaschine werden Backgutträger mit Teigformlingen belegt. Die Backgutträger werden in den Gärraum 2 überführt, verweilen dort während einer bestimmten Zeitspanne bei vorgegebener Temperatur und gelangen dann in den Backofen 3 und schließlich auf einen Tisch 4, der mit Weiterförderern, Einrichtungen zur Abnahme der Gebäckstücke von den Backgutträgern, Einrichtungen zur Bearbeitung der Gebäckstücke oder dergleichen versehen oder verbunden sein kann. Schließlich kann in einer Funktionsreihe mit den soeben erwähnten Einheiten oder separat ein Lagergestell 5 für leere Backgutträger vorgesehen sein.

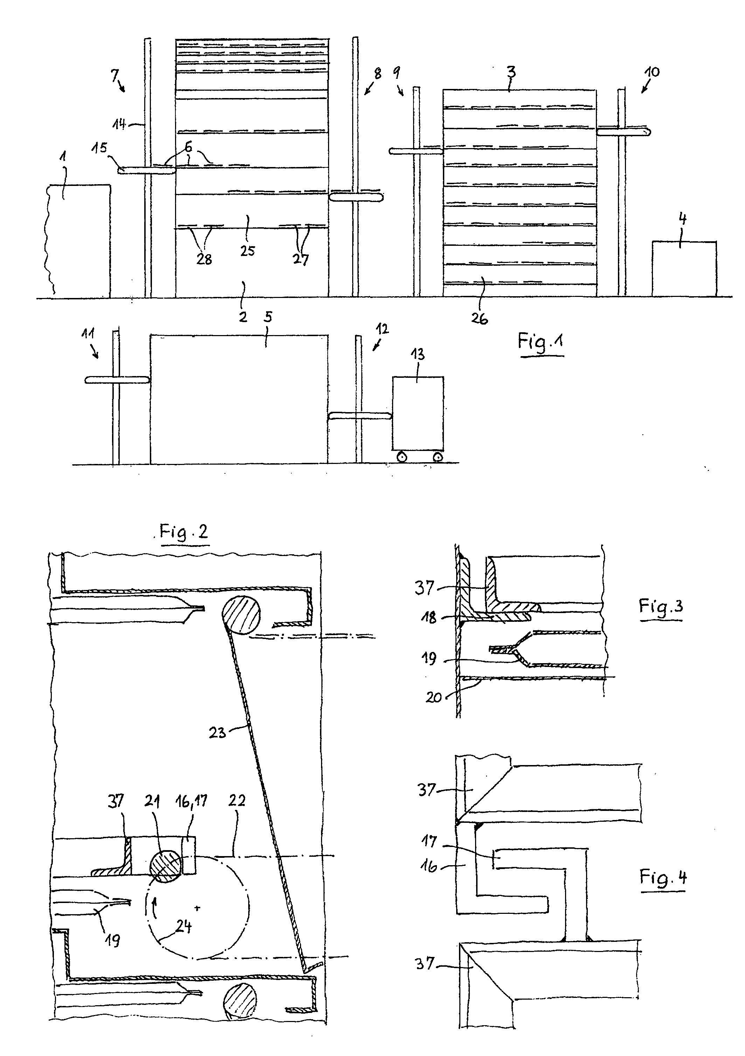

Die Backgutträger 6 setzen sich jeweils aus einem Rahmen 37 und einem oder mehreren Einsätzen zusammen, die von Blechen, Dielen, Kastenverbänden oder dergleichen gebildet sein können. Die Rahmen 37 haben sämtlich gleiche Breite, passend zur Führungsbreite der einzelnen Einheiten 1-5. Ihre Länge (in Förderrichtung) ist gleich oder ein ganzes Vielfaches eines Moduls, der passend zur Aufnahmelänge der Einheiten 1-5 gewählt ist. In dem in Fig.1 dargestellten Beispiel ist angenommen, daß der Gärraum 2 und der Backofen 3 in jeder Etage je 6 Backgutträger gleicher Länge aufnehmen können.

Zum Umsetzen von einer Einheit zur nächsten sind Förderer vorgesehen, nämlich ein Eingabeförderer 7 und ein Entnahmeförderer 8 vor bzw. hinter dem Gärraum 2, ein Eingabeförderer 9 und ein Entnahmeförderer 10 vor bzw. hinter dem Backofen 3 und ein Eingabeförderer 11 und ein Entnahmeförderer 12 vor dem Lagergestell 5. Der Entnahmeförderer einer Einheit kann gleichzeitig der Eingabeförderer einer nachgeschalteten Einheit sein. Die Förderer können stationär vorgesehen werden. Das gilt insbesondere für die am Gärraum und Backofen vorgesehenen Förderer, wenn Gärraum und Backofen gleiche Breite aufweisen. Wenn der Gärraum größere Breite als der Backofen hat, sind seine Eingabe- und Entnahmeförderer 7, 8 zumindest seitenbeweglich ausgeführt. Wenn die Einheiten der Anordnung nicht in Funktionsreihe hintereinander angeordnet sind, können ihre Eingabe- und Entnahmeförderer ortsbeweglich sein. Das gilt insbesondere für die Förderer 11 und 12 des Lagergestells 5. Statt dessen ist es aber auch möglich, den Transport von einer Einheit zur anderen über besondere Wagen 13 vorzunehmen, wobei die der Einheit 1-5 zugeordneten Förderer 7-12 stationär sind.

Die Entnahmeförderer einer Einheit können gleichzeitig Eingabeförderer der folgenden Einheit sein. Ihre Trennung führt aber in der Regel zu höherer Arbeitsgeschwindigkeit. Ihre Aufnahmelänge kann unterschiedlich bemessen sein. Sie ist gleich der Länge der Backgutträger oder ein ganzen Vielfaches derselben bzw. des der Länge der Backgutträger zugrundeliegenden Moduls.

Die Förderer umfassen jeweils eine Hubsäule 14 und ein Förderorgan 15, das an der Hubsäule 14 zur Einstellung auf unterschiedliche Etagenhöhen vertikal verfahrbar ist. Das Förderorgan 15 kann man sich beispielsweise als eine Führung mit einem zugeordneten Antrieb für die Backgutträger vorstellen. Eine einfache Ausführung des Antriebs bedient sich eines Paars beiderseits der Führung angeordneter, endlos umlaufender Ketten, die einen mit den Backgutträgern zusammenwirkenden Mitnehmer tragen. Statt dessen könnten aber auch Kolben-Zylinder-Einrichtungen oder Schraubspindeleinrichtungen zum Bewegen der Backgutträger vorgesehen sein.

Der Gärraum 2, der Backofen 3 und das Lagergestell 5 haben jeweils eine Vielzahl von Etagen zur Aufnahme von Backgutträgern. Deren Höhenbedarf ist unterschiedlich. Er ist beim Backofen etwa doppelt so groß wie beim Gärraum und sehr gering im Lagergestell 5. Bei gleicher Länge und Höhe stellt der Gärraum eine Gärzeit zur Verfügung, die etwa doppelt so groß ist wie die Backzeit. Wenn ein größeres Verhältnis von Gärzeit zu Backzeit verlangt wird, kann der Gärraum entsprechend höher ausgeführt werden. Er kann auch länger sein, obwohl gleiche Länge der Gär- und Backetagen im Hinblick auf eine übersichtliche Prozeßsteuerung vorteilhaft ist. Schließlich können auch zwei Gärräume nebeneinander angeordnet und die ihnen zugeordneten Förderer 7, 8 quer verfahrbar vorgesehen werden.

Die Eingabeförderer sind so ausgebildet, daß bei Eingabe eines Backgutträgers 6 die bereits in der betroffenen Etage befindlichen Backgutträger um eine Backgutträgerlänge weitergeschoben werden. So ist bei Darstellung des Eingabeförderers 7 zum Gärraum 2 im dargestellten Beispiel angenommen, daß die Etage, auf die das Förderorgan 15 eingestellt ist, bereits zur Hälfte gefüllt ist. Wenn der noch auf dem Förderorgan befindliche Backgutträger eingeschoben ist, ist sie zu zwei Dritteln gefüllt. Durch Nachschieben einer Charge von weiteren zwei Backgutträgern wird die Etage vollständig gefüllt werden. Der Eingabeförderer 9 des Backofens 3 ist im Begriff, durch Einschieben eines sechsten Backgutträgers zu den bereits in der Etage befindlichen fünf Backgutträgern die Etage vollständig zu füllen. Hingegen hat der Entnahmeförderer 8 des Gärraums 2 soeben aus einer Etage zwei Backgutträger herausgezogen und wird diese, sobald der Eingabeförderer 9 des Backofens 3 frei ist, an diesen weitergeben. Der Entnahmeförderer 10 des Backofens hat soeben zwei Backgutträger aus einer Backetage entnommen und wird diese an den Tisch 4 abgeben.

Bei der Entnahme von Backgutträgern werden die nicht unmittelbar vom Förderorgan erfaßten, in der Etage befindlichen Backgutträger nachgezogen, weil sie miteinander zugfest verbunden sind.

Ein einfaches Beispiel für eine solche zugfeste Verbindung erkennt man in Fig.4. Die Vorder- und Rückseiten der Rahmen 37 sind mit zusammenpassenden Haken 16, 17 versehen, die durch eine geeignete Relativbewegung der Rahmen beim Einsetzen des letzten von beiden miteinander in Eingriff gelangen. Im dargestellten Beispiel ist dafür eine vertikale Relativbewegung erforderlich, die dank der vertikalen Beweglichkeit der Förderorgane 15 an den Hubsäulen 14 leicht verwirklicht werden kann. Entsprechendes gilt für ihre Lösung voneinander bei der Entnahme.

Die Rahmen ruhen innerhalb des Gärraum 2, des Backofens 3 oder des Lagergestells 5 beiderseits auf Gleitführungen 18. Eine solche Gleitführung ist in Fig.3 als einfaches Winkelprofil dargestellt. Die Gleitführung kann gewünschtenfalls mit einem gleitgünstigen Belag, mit Rollen oder dergleichen ausgerüstet sein. Auch die Rahmen 37 können entsprechend gleitgünstig gestaltet sein. Es ist in Fig.3 erkennbar, daß die Anordnung der Führungsorgane hinreichend Platz für Heizplatten 19 und Etagentrennwände 20 läßt.

Die Antriebselemente der Förderorgane 15 können unmittelbar mit der Außenfläche der Rahmen 37 oder der Haken 16, 17 zusammenwirken, wenn die Backgutträger in die Einheiten 2, 3, 5 eingeschoben werden. Beim Herausziehen können sie mit den Haken 16, 17 oder für sie besonders vorgesehenen Kupplungsorgangen zusammenwirken. Wenn der Antrieb von Kettenpaaren mit Mitnehmern gebildet wird, kann das Zusammenwirken in der in Fig.2 veranschaulichten Weise geschehen. Die Länge der Backetage ist im Verhältnis zur Länge der Backgutträger und deren Einschubposition so bemessen, daß sie auf der Vorderseite der Haken 16, 17 des Rahmens 37 oberhalb der Heizplatte 19 frei liegt, um von einem Mitnehmer 21 erfaßt werden zu können, der an einer Kette 22 als Antriebsorgan umläuft. Wenn ein Backgutträger entnommen werden soll, wird die Klappe 23 der Etage geöffnet und das Förderorgan 15 fährt so weit in die Etage ein, daß in seiner Endstellung der aus dem Umlenkbereich 24 der Kette 22 sich anhebende Mitnehmer 21 hinter den Haken 16 oder 17 greift und in dieser Höhe bleibt, wenn er im Bereich des oberen Trums der Kette 22 läuft. Er löst sich von dem Haken 16, 17 dann, wenn er in der nicht gezeigten, anderen Umlenkung derselben Kette 22 aus der Höhe des oberen Trums sich wieder absenkt. Sobald das Förderorgan die von der Steuerungseinrichtung vorbestimmte Anzahl von Backgutträgern aufgenommen hat, hebt sie sich ein wenig an, um die Zugverbindung zwischen dem letzten aufgenommenen Backgutträger und dem ersten in der Etage verbleibenden Backgutträger zu lösen, fährt aus der Etage heraus, damit die Klappe 23 schließen kann, und sucht den Anschluß an das jeweilige Weiterförderorgan. Dabei kann das Umsetzen vom Entnahmeförderer 8 des Gärraums auf den Eingabeförderer 9 des Backofens unter gleichzeitigem Wechsel des Backgutträgers erfolgen. Einschlägige Techniken sind bekannt und bedürfen daher hier keiner Erläuterung.

Die Eingabe kann analog der unter Bezugnahme auf Fig.2 beschriebenen Entnahme vor sich gehen.

Im dargestellten Beispiel haben der Gärraum 2 und der Backofen 3 dieselbe Länge. Dies ist aber nicht erforderlich. Beispielsweise ist es möglich, die Etagenlänge des Backofens halb so groß wie diejenige des Gärraums vorzusehen (oder umgekehrt). Es besteht auch die Möglichkeit, ihre Länge als ganzes Vielfaches eines kleineren Moduls zu wählen. Eine übersichtliche Prozeßsteuerung ergibt sich, wenn der Gärraum 2 eineinhalb oder doppelt so lang ist wie der Backofen 3.

Die Steuerung des Systems ist dann am einfachsten, wenn jeweils mit vollständigen Etagenfüllungen von Backgut gleicher Gär- und Backzeit gearbeitet wird. Die Etagen werden dann jeweils in ihrer Gesamtheit von einem Eingabeförderer gefüllt und können in ihrer Gesamtheit von einem Entnahmeförderer geleert werden. Es versteht sich, daß die Füll- und Entleerungsvorgänge in mehreren aufeinander folgenden Schritten erfolgen können, da die Länge der Förderorgane 15 in der Regel kleiner ist als diejenige der Etagen.

Es ist aber auch möglich, eine Etage mit unvollständiger Füllung zu betreiben oder mit Backgut unterschiedlicher Behandlungszeit zu füllen. Ein Beispiel sei anhand der Etagen 25, 26 des Gärraums 2 und des Backofens 3 in Fig.1 behandelt. Die an der Entnahmeseite anstehenden Backgutträger 27 waren in einem vorausgehenden Bearbeitungsstadium gemeinsam mit den vier nun in Etage 26 des Backofens befindlichen Backgutträgern in der Etage 25 und rückten an die Entnahmeseite vor, als die anderen Backgutträger entnommen wurden. Sie mögen ein Backgut tragen, für das eine längere Gärzeit vorgesehen ist, und sind deshalb noch im Gärraum 2 belassen worden. Später wurden zwei Backgutträger 28 nachgeschoben, die nach Entnahme der Backgutträger 27 beim Einschub von vier weiteren Backgutträgern an die Entnahmeseite der Etage vorrücken werden. Falls nur weniger als vier weitere Backgutträger zur Verfügung stehen, kann der Leerraum durch leere Backgutträger oder -rahmen aufgefüllt werden. So ist es möglich, auch kleinere Einheiten von Backgutträgern, deren Anzahl geringer ist als die der vollen Etagenlänge zugeordnete Anzahl, individuell zu behandeln.

Um den Backofen 3 vollständig auslasten zu können, ist es zweckmäßig, dem Gärraum 2 so viel Überkapazität zu geben, daß er als Puffer zwischen der Gebäckformmaschine 1 und dem Backofen 3 wirken kann.

Im allgemeinen wird man die erfindungsgemäßen Vorrichtungen und Verfahren im Durchlauf betreiben. Es besteht aber auch die Möglichkeit, lediglich eine einzige Öffnung vorzusehen, die sowohl als Eingabeöffnung als auch als Entnahmeöffnung verwendet wird. Die einzelnen Stationen wie Gär- und Backraum können dann beispielsweise nebeneinander angeordnet sein, und die Förderer, die sowohl der Eingabe als auch der Entnahme dienen, sind quer zur Eingabe- und Entnahmerichtung von einer Station zur anderen verfahrbar.

## Patentansprüche

1. Backanordnung bestehend aus einem Backofen (3), der eine Eingabeöffnung mit einem Eingabeförderer (9) und eine Entnahmeöffnung mit einem Entnahmeförderer (10) aufweist, und Backgutträgern (6), deren Länge geringer ist als die Länge des Backofens (3) und die in Mehrzahl hintereinander in Führungen (18) des Backofens (3) bewegbar sind, **dadurch gekennzeichnet, daß** der Backofen (3) fördererlos ausgebildet ist, die Backgutträger (6) schub- und zugfest zusammenwirkende Kupplungseinrichtungen (16, 17) aufweisen und die Eingabe- und Entnahmeförderer (9, 10) zum Einschieben bzw. zum Herausziehen des jeweils öffnungsnächsten Backgutträgers (6) und zum gleichzeitigen Weiterbewegen von damit verbundenen, im Backraum befindlichen Backgutträgern (6) ausgebildet sind.

2. Backanordnung bestehend aus einem Backofen (3), der eine Eingabe- und Entnahmeöffnung mit einem Eingabe- und Entnahmeförderer aufweist, und Backgutträgern, deren Länge geringer ist als die Länge des Backofens (3) und die in Mehrzahl hintereinander in Führungen (18) des Backofens (3) bewegbar sind, **dadurch gekennzeichnet, daß** der Backofen (3) fördererlos ausgebildet ist, die Backgutträger (6) schub- und zugfest zusammenwirkende Kupplungseinrichtungen (16, 17) aufweisen und der Eingabe- und Entnahmeförderer zum Einschieben bzw. Herausziehen des jeweils öffnungsnächsten Backgutträgers (6) und zum gleichzeitigen Weiterbewegen von damit verbundenen, im Backraum befindlichen Backgutträgern (6) ausgebildet ist.

3. Anordnung nach Anspruch 1 oder 2, **dadurch gekennzeichnet, daß** die Kupplungseinrichtungen der Backgutträger (6) von komplementären Haken (16, 17) an ihren Vorder- und Rückseiten gebildet sind.

4. Anordnung nach einem der Ansprüche 1 bis 3, **dadurch gekennzeichnet, daß** die Backgutträger (6) mit von ihnen lösbaren Zug- und Schubrahmen (37) ausgerüstet sind.

5. Anordnung nach einem der Ansprüche 1 bis 4, **dadurch gekennzeichnet, daß** der Eingabeförderer (9) und/oder der Entnahmeförderer (19) einen an einer umlaufenden Kette (22) angeordneten Mitnehmer (21) aufweist, der durch seinen Eintritt in einen Umlenkweg (24) der Kette außer Eingriff bzw. seinen Austritt aus einem Umlenkweg (24) der Kette in Eingriff mit einem Backgutträger (6), einem Rahmen (37) oder einer Kupplungseinrichtung (16, 17) gelangt.

## Claims

1. A baking arrangement comprising a baking oven (3) which has an infeed opening with an infeed conveyor (9) and a discharge opening with an discharge conveyor (10), and baking product carriers (6), the length of which is shorter than the length of the baking oven (3) and which can move in a series one behind the other in guides (18) of the baking oven (3), **characterised in that** the baking oven (3) is designed without a conveyor, the baking product carriers (6) have coupling means (16,17) co-operating in a manner resistant to shearing and tension and the infeed and discharge conveyors (9, 10) are designed to introduce and discharge the baking product carrier (6) nearest the respective opening, and to effect the simultaneous continued movement of baking product carriers (6) connected thereto and situated in the baking chamber.

2. A baking arrangement comprising a baking oven (3) which has an infeed opening and a discharge opening with an infeed conveyor and a discharge conveyor, and baking product carriers the length of which is shorter than the length of the baking oven (3) and which can move in series one behind the other in guides (18) of the baking oven (3), **characterised in that** the baking oven (3) is designed without a conveyor, the baking product carriers (6) have coupling means (16,17) co-operating in a manner resistant to shearing and tension and the infeed and discharge conveyors are designed to introduce and remove the baking product carrier (6) nearest the respective opening, and to effect the simultaneous continued movement of baking product carriers (6) connected thereto and situated in the baking chamber.

3. A baking arrangement according to Claim 1 and 2, **characterised in that** the coupling means of the baking product carriers (6) are formed by complementary hooks (16,17) on their front and rear sides.

4. A baking arrangement according to any one of Claims 1 to 3, **characterised in that** the baking product carriers (6) are provided with push and pull frames (37) which can be released therefrom.

5. A baking arrangement according to any one of Claims 1 to 4, **characterised in that** the infeed conveyor (9) and/or the discharge conveyor (19) has an entrainment means which is mounted on a rotating chain (22) and which becomes disengaged by entering a reversal path (24) of the chain and which by leaving a reversal path (24) of the chain becomes engaged with a baking product carrier (6), a frame (37) or a coupling means (16,17).

## Revendications

1. Dispositif de cuisson constitué d'un four de cuisson (3), qui comporte une ouverture d'entrée avec un transporteur d'entrée (5) et une ouverture de prélèvement avec un transporteur de prélèvement (10), ainsi que de supports (6) pour le produit à cuire dont la longueur est inférieure à la longueur du four de cuisson (3) et qui sont déplaçables à plusieurs, les uns derrière les autres, dans des guides (18) du four de cuisson (3), **caractérisé en ce que** le four de cuisson (3) est conçu sans transporteur, les supports (6) pour le produit à cuire comportent des dispositifs d'accouplement (16, 17) coopérant solidairement en poussée et traction, et les transporteurs d'entrée et de prélèvement (9, 10) sont conçus pour l'introduction, ou l'extraction du support (6) pour produit à cuire le plus proche de l'ouverture, et pour l'évacuation simultanée de supports (6) pour produit à cuire reliés à celui-ci et se trouvant dans l'enceinte de cuisson.

2. Dispositif de cuisson constitué d'un four de cuisson (3), qui comporte une ouverture d'entrée et de prélèvement avec un transporteur d'entrée et de prélèvement ainsi que des supports pour le produit à cuire dont la longueur est inférieure à la longueur du four de cuisson (3) et qui sont déplaçables à plusieurs, les uns derrière les autres dans des guides (18) du four de cuisson (3), **caractérisé en ce que** le four de cuisson (3) est conçu sans transporteur, les supports (6) pour le produit à cuire comportent des dispositifs d'accouplement (16, 17) coopérant solidairement en poussée et traction, et le transporteur d'entrée et de prélèvement est conçu pour l'introduction, respectivement l'extraction du support (6) pour produit à cuire le plus proche de l'ouverture, et pour l'évacuation simultanée de supports (6) pour produit à cuire reliés à celui-ci et se trouvant dans l'enceinte de cuisson.

3. Dispositif selon la revendication 1 ou 2, **caractérisé en ce que** le dispositif d'accouplement des supports (6) pour produit à cuire est constitué de crochets complémentaires (16, 17) sur leurs côtés avant et arrière.

4. Dispositif selon l'une des revendications 1 à 3, **caractérisé en ce que** les supports (6) pour produit à cuire sont équipés de cadres de traction et de poussée (37) qui peuvent être détachés de ceux-ci.

5. Dispositif selon l'une des revendications 1 à 4, **caractérisé en ce que** le transporteur d'entrée (9) et/ou le transporteur de prélèvement (19) comporte un entraîneur (21) disposé sur une chaîne (22) en circulation, lequel est désengagé d'un support (6) pour produit à cuire, d'un cadre (37) ou d'un dispositif d'accouplement (16, 17) lorsqu'il entre dans un parcours de renvoi (24) de la chaîne, ou s'engage dans ceux-ci lorsqu'il sort d'un parcours de renvoi (24) de la chaîne.
